# EUROPEAN PATENT APPLICATION

(11) **EP 3 736 119 A1**
(43) Date of publication of application: **11.11.2020**
(21) Application number: 19173760.0
(22) Date of filing: 10.05.2019
(51) Int. Cl.: B29D 23/20, B32B 33/00, B29C 65/00, B32B 27/32

(54) **COMPOSITE FILM FOR A TUBE WITH A 360° PRINTING EFFECT**

(71) Applicant: Albéa Services, 92230 Gennevilliers (FR)
(72) Inventor: SURVANA, Sudheer, Gravesend Kent DA11 8FF (GB)
(74) Representative: Gevers & Orès

(57) **Abstract**

The invention concerns a composite film for receptacles, in particular for tubes, with a plurality of layers connected to one another in a sheetlike manner to form a layer stack, this composite film comprising:
- a base film 1 having a lower surface 8 and an upper surface 10;
- a cover film 2 having a lower surface 11 facing the base film 1 and an upper surface 12;
- an ink layer 7 applied on the upper surface 12 of the cover film 2, excepted on a first lateral edge margin M1 of the composite film.

The composite film comprises an ink line 13 applied between the base film 1 and the cover film 2, in said first lateral edge margin M1 region, along the whole length of the composite film.

## Description

### Technical field

The invention relates to a composite film for a receptacle, in particular a composite film for a tube, with a 360° printing effect.

The composite film comprises a plurality of layers which are connected to one another in a sheetlike manner to form a layer stack. This layer stack is provided with at least two sealable layers having each a material which is sealable to the other.

The invention also concerns the tube that is formed by joining the two end portions of the composite film to each other, by overlapping and by welding them thanks to the two sealable layers.

Conventional composite films for tubes or the like are mostly between 200 and 700 µm thick, in order to ensure a rigidity of the tube which is sufficient for use.

The outer surface of the composite film, forming the outer surface of the tube, is provided with a printed layer. The invention ensures an uninterrupted printing pattern all around the tube, without any unprinted gap nearby the overlapping.

The invention finally concerns methods for producing such composite film.

### Technical background

The plastic packages currently used on the market are mainly divided into two categories : extruded tubes and laminated tubes.

These two types of tubes differ in the printing process.

The extruded tube is printed on the curved surface after the tube is formed, so it is very easy to achieve the 360° printing effect on the whole tube.

The laminated tube is pre-printed : the composite film composing the tube is printed on its whole outer surface, then wound, and its two end portions are overlapped and sealed by any known technique. For a conventionally laminated composite tube, the tube body has a bad side seam due to hot sealing on the ink and the composite film (mainly composed of polyethylene material). This bad side seam is due to the incompatibility between ink and polyethylene.

For avoiding this bad side seam, it is known to leave a blank area (i.e. an unprinted area) on a lateral edge margin of the outer surface of the composite film. So that the first end portion of polyethylene can easily be sealed on the lateral edge margin of polyethylene. In this case, the lap weld is clean, but a little unprinted gap appears at the periphery of the side seam. This unprinted gap makes the tube having certain defects in appearance.

For avoiding this unprinted gap, it is known to use the reverse printing. This technique consists in printing the whole outer surface of a base film of the composite film, and then laminating a transparent cover film on the base film, so as to protect the imprint. The cover film is in polyethylene. So that both end portions are in polyethylene and can easily be sealed, for forming a clean side seam. However, due to the occlusion of the cover film, the appearance of the imprint is too dark. Moreover, there is a risk of ink contamination as the imprint, located in an inner layer of the side seam, is exposed to the product stored inside the tube.

### Invention content

In order to solve the problems existing in the prior art, the present invention provides a composite film for the production of composite receptacles, particularly tubes, having a 360° printing effect that satisfies high requirements in terms of decoration effect, without any risk of ink contamination, and furthermore, that can be processed with current printing technology.

The composite film of the invention is conventionally formed by a plurality of layers connected to one another in a sheetlike manner to form a layer stack. This composite film comprises:
- a base film having a lower surface and an upper surface;
- a cover film having a lower surface facing the base film and an upper surface;
- an ink layer applied on the upper surface of the cover film, excepted on a first lateral edge margin of the composite film;
- an ink line applied between the base film and the cover film, in said first lateral edge margin region, along the whole length of the composite film.

The main idea of the invention is to add an ink line that enables to extend the ink layer in the region of the conventional unprinted gap nearby the side seam.

In other words, the idea is to combine the technique of the blank area for having a clean side seam, and the technique of the reverse printing for decorating the remaining gap.

The color of the ink line must correspond to the background color of the ink layer, so that the user will not notice this colored gap.

At the end, when the composite film is rolled for forming the tube, there will be a 360° printing effect, thanks to the ink layer completed by the ink line.

According to the invention, the ink line has a lateral start that starts at least where the ink layer finishes : as a result, there is no space between the ink layer and the ink line. In other words, the ink line is located in the continuity of the ink layer, but in a lower level in the composite film. Consequently, from outside, the user won't notice the end of the ink layer.

The ink line is located in an inner layer of the composite film. Due to the overlapping, a first lateral edge of this inner layer is in contact with the product. According to the invention, the ink line has a lateral finish that finishes before a first lateral edge of the composite film. This is important for avoiding ink contamination with the product stored inside the tube.

According to different embodiments, that can be taken together or separately:
- the ink line is applied on the lower surface of the cover film.
- the ink line is applied on the upper surface of the base film.
- the base film and the cover film each comprises a material which is sealable to itself and/or to the material of the other of these two films.
- the material forming the lower surface of the base film is sealable to the material forming the upper surface of the cover film.
- the material forming the lower surface of the base film consists preferably of polyethylene
- the material forming the upper surface of the cover film consists preferably of polyethylene.
- the base film is a multilayered film.
- the cover film is a multilayered film.
- the thickness of the base film is comprised between 200 and 400µm, and the thickness of the cover film is comprised between 15 and 120µm.

The invention also relates to a receptacle, in particular a tube, with a wall consisting of a cut-to-size film piece of a composite film as described above, said film piece comprising a first lateral edge margin and a second lateral edge margin, wherein the two lateral edges margins are joined together by overlapping, the cover film upper surface of the first lateral edge margin being sealed to the base film lower surface of the second lateral edge margin. This kind of overlapping is classical, and enables to keep the same side seam specification and integrity as in the state of art.

This receptacle comprises a gap between a lateral finish of the ink layer and a second lateral edge of the composite film, said ink line extending at least over the whole gap.

And finally, the invention deals with a method for producing a composite film as previously described, wherein it comprises the following steps:
- printing the ink line on the upper surface of the base film;
- laminating the base film with the cover film;
- applying the ink layer on the upper surface of the cover film.

The last two steps could be reversed.

A second method for producing such a composite film can be used. This second method comprises the following steps:
- printing the ink line on the lower surface of the cover film;
- applying the ink layer on the upper surface of the cover film;
- laminating the base film with the cover film.

The last two steps could be reversed.

For both methods, there is no need to use specific printing machine or tools. It is possible to use known printing technology. There is also no need to develop special ink.

### Short description of the drawings

The invention will now be further described, by way of example only, with reference to the accompanying drawings, of which :
figure 1 shows the different layers of a composite film according to a first embodiment of the invention;
figure 2 illustrates a top view of the composite film of figure 1;
figure 3 shows the different layers of a composite film according to a second embodiment of the invention;
figure 4a shows the overlapping of both edges of the composite film of figure 1;
figure 4b shows the overlapping of both edges of the composite film of figure 1, with cut edges;[Fig.5] figure 5 illustrates the different steps of a first process for producing a composite film;
figure 6 illustrates the different steps of a second process for producing a composite film.

### Detailed description of preferred embodiment

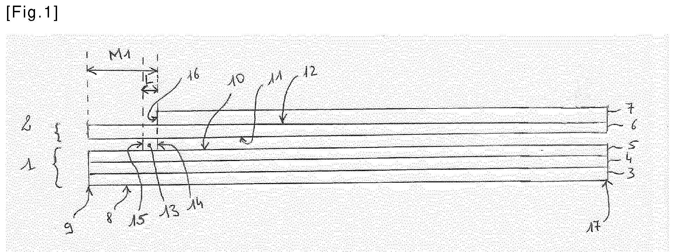

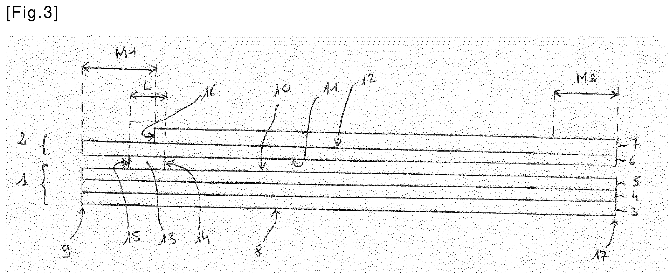

Figures 1 and 3 show a diagrammatic cross section through a composite film for tubes in the form of a layer stack of a base film 1 and a cover film 2.

The base film 1 and the cover film 2 are sealable to each other.

The base film 1 has a lower surface 8 and an upper surface 10.

The cover film 2 also has a lower surface 11 and an upper surface 12.

The upper surface 10 of the base film 1 is facing the lower surface 11 of the cover film 2. The upper surface 10 of the base film 1 and the lower surface 11 of the cover film 2 are formed in materials that can be sealed to each other, so as to produce the composite film. It can be the same material or two different materials.

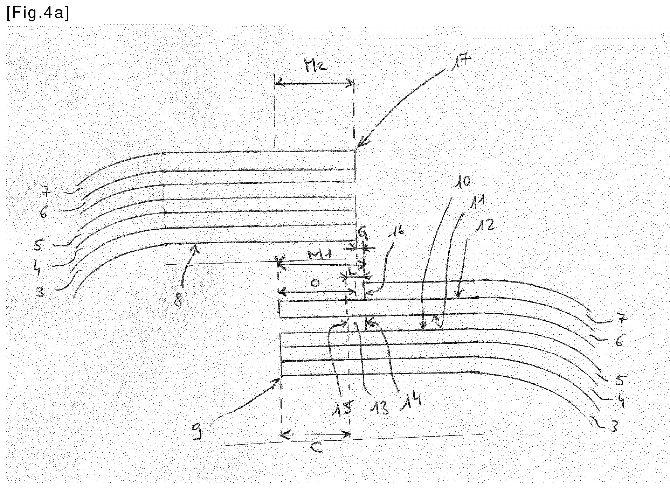

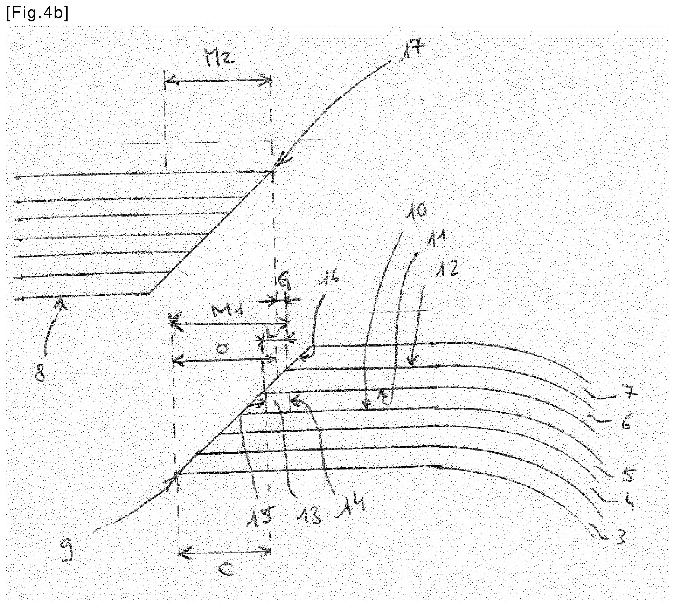

This composite film is used to producing receptacles, in particular tubes that can store cosmetic or pharmaceutic formulas for instance. For this purpose, the composite film is rolled to form a tube which can be connected, leaktight, at its mutually lateral edge margins M1, M2 running along the tube axis, in an overlap seam O as depicted in figure 4. The lower surface 8 of the base film 1 and the upper surface 12 of the cover film 2 are formed in materials that can be sealed to each other, so as to form the overlap seam O. It can be the same material or two different materials.

These materials consist of thermally weldable materials. The connection may take place by means of thermal welding, for example high frequency welding, or induction welding.

The material of the upper and lower surfaces of the film base and the film cover is selected from the standpoint of optimum sealing properties and, if appropriate, sufficient transparency.

Preferably, this material is polyethylene (PE). It can be any other suitable material.

Moreover, the material of the cover film upper surface 12 is selected from the standpoint of optimum printability. This upper surface 12 serves indeed as a print carrier for a decorative imprint. This decorative imprint corresponds to an ink layer 7 applied on the cover film upper surface 12. It is possible to print bright colors as well as dark colors.

This ink layer 7 is applied on the whole surface, excepted on a first lateral edge margin M1 located at the vicinity of a first lateral edge 9 of the composite film. This first lateral edge margin M1 must be free from ink because it will accommodate the opposite second lateral edge margin M2 of the base film lower surface 8, by overlapping as previously explained. The lateral finish 16 of the ink layer 7 finishes well before the first lateral edge 9 of the composite film. It is important to leave enough margin for the overlap seam O, in order to ensure a good welding.

When these two lateral edge margins M1, M2 are overlapped, an unprinted gap G can remain between the end 16 of the imprint, and the second lateral edge 17 of the composite film. This unprinted gap G width is usually comprised between 0,5 and 1mm. This unprinted gap G is illustrated in figure 4a.

For coloring this unprinted gap G, an ink line 13 is added into the composite film. This ink line 13 extends over the whole surface of the unprinted gap G. The ink line 13 extends longitudinally on all the length of the composite film.

More precisely, this ink line 13 is added into the composite film, between the base film 1 and the cover film 2. The ink line 13 can be either printed on the lower surface 11 of the cover film 2, or on the upper surface 10 of the base film 1.

The cover film 2 is chosen so as to have transparency and protective properties. As a result, this ink line 13 is visible through the transparent cover film 2.

The ink line 13 is not located at the same level than the ink layer 7, when observing the thickness of the composite film. But from a user point of view, that looks to the composite film from outside, the ink layer 7 is merged with the ink line 13. The ink line 13 is in the continuity of the ink layer 7 from a lateral point of view.

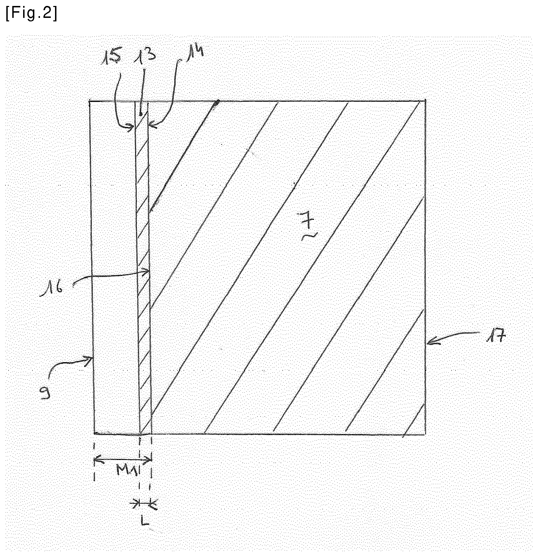

The ink line 13 has a width L at least equivalent to the width of the unprinted gap G. As depicted in figures 1 and 2, the lateral start 14 of the ink line 13 is aligned with the lateral finish 16 of the ink layer 7. But in figure 3, the lateral start 14 of the ink line 13 starts before the lateral finish 16 of the ink layer 7, for taking a safety margin according to the offset of the ink layer 7 during the process.

The lateral finish 15 of the ink line 13 is at least aligned with the superimposed second lateral edge 17 of the composite film.

But the ink line 13 can be larger than the unprinted gap G, for taking a safety margin according to the offset of the overlapping from one tube to the other. As a result, the lateral finish 15 of the ink line 13 finishes after the superimposed second lateral edge 17 of the composite film. This is clearly visible on figure 4a.

Such a composite film can be used for producing a tube, with a wall consisting of a cut-to-size film piece of said composite film. Said film piece comprises a first lateral edge margin (M1) and a second lateral edge margin (M2). The two lateral edges margins (M1, M2) are joined together by overlapping, the cover film upper surface (12) of the first lateral edge margin

(M1) being sealed to the base film lower surface (8) of the second lateral edge margin (M2).

These two lateral edges margins can be cut at an angle. Usually it is cut at 45 degrees, in order to have a clean side seam, without unsightly extra thickness, as depicted in figure 4b.

Thanks to the composition and the shape of the lateral edges margins M1, M2, it is no more essential to have an accurate positioning of the two edges when welding them. In other words, there is a degree of freedom over the relative placement of the lateral edge 9 relative to the lateral edge 17.

In all the cases, a tube, formed by this composite film with the side seam, is printed on its 360° surface. When the tube is formed, there is no more visible unprinted space.

Once the overlap is seamed, the whole first lateral edge 9 of the composite film is in contact with the formula stored inside the tube. For avoiding any ink contamination, the ink line 13 finishes well before the first lateral edge 9 of the composite film. It is important to leave enough clearance C in order to ensure that the ink line 13 will not be into contact with the formula. This clearance C width is preferably comprised between 0,7mm and 2mm. This clearance C also enables to avoid delamination issue of the composite film. This kind of delamination can be observed when the ink line 13 it too close from the lateral edge 9, and thus the cover film 2 is not enough bonded on the base film 1 nearby the lateral edge 9.

The base film 1 may be designed as a monolayer. However, it can also take the form of a multilayered film. In this example, the base film 1 comprises a lower layer 3 presenting the lower surface 8, a middle layer 4, and an upper layer 5 presenting the upper surface 10. Each of these layers 3, 4, 5 assumes functional tasks.

The middle layer 4 can for instance correspond to a barrier layer which prevents the outward migration of substances of the tube contents or else substances from the outside inward.

Furthermore, the base film 1 may carry a metal layer, which may have a barrier function, against humidity for instance.

The base film 1 is preferably a laminated film.

The cover film 2 is designed as a monolayer in this example. However, it can also take the form of a multilayered film, but with taking care to keep enough transparency properties, for letting the ink line 13 appear through it. The cover film 2 is preferably a laminated film.

Preferably, the base film 1 thickness is comprised between 200 and 400µm.

Preferably, the cover film 2 thickness is comprised between 15 and 120µm.

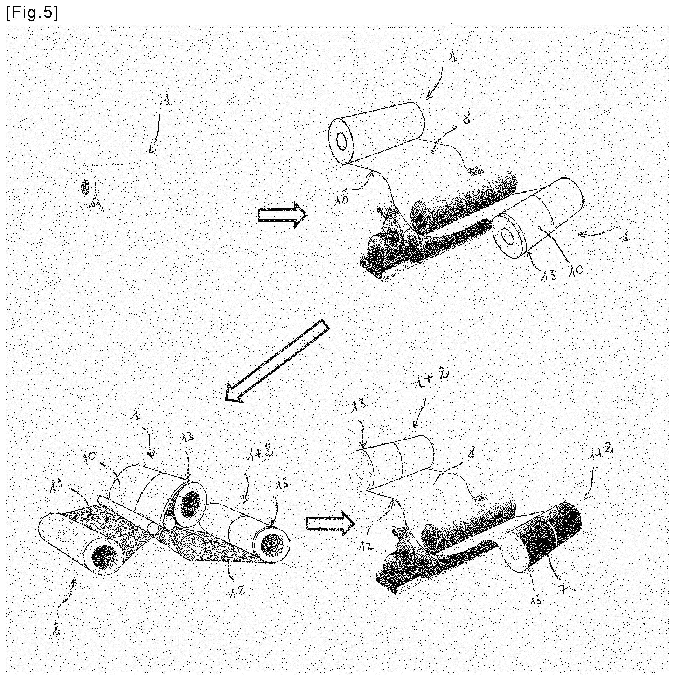

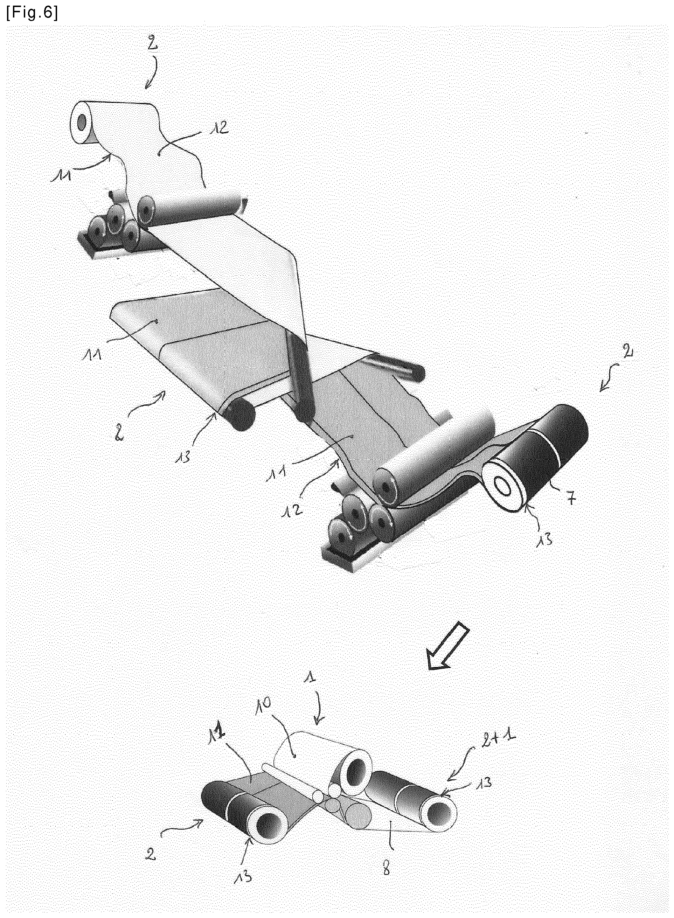

Figures 5 and 6 are related to the process for producing a composite film according to the invention.

Figure 5 illustrates a first process, where a base film 1 is unrolled between rollers for printing an ink line 13 on its upper surface 10.

After that, the base film 1 is laminated with a cover film 2, by bringing into contact the cover film lower surface 11 with the base film upper surface 10. The resulting film (1+2) gets through rollers again for printing an ink layer 7 on the cover film upper surface 12.

The resulting composite film is thus ready for tube making. The next step consists in cutting this composite film to produce cut-to-size film pieces for each tube. This cut-to-size film is then rolled and the two overlapped margins are sealed together.

Figure 6 illustrates a second process, where a cover film 2 is unrolled between rollers for printing an ink line 13 of its lower surface 11. After that the cover film 2 gets through a plurality of turning bars so as to reverse it.

Then the cover film 2 gets through rollers for printing an ink layer 7 on its upper surface 12.

After that, the cover film 2 is laminated with a base film 1 by bringing into contact the cover film lower surface 11 with the base film upper surface 10.

The resulting composite film is thus ready for tube making. The next step consists in cutting this composite film to produce cut-to-size film pieces for each tube. This cut-to-size film is then rolled and the two overlapped margins are sealed together.

The lamination step of the base film 1 with the cover film 2 is preferably done by extrusion or with solvent.

The printing rollers and machines are well-known.

Although the film of the invention has been described above by reference to a specific embodiment shown in the drawing figures, it should be understood that modifications and variations could be made without departing from the intended scope of the following claims.

## Claims

1. A composite film for receptacles, in particular for tubes, with a plurality of layers connected to one another in a sheetlike manner to form a layer stack, this composite film comprising:
- a base film (1) having a lower surface (8) and an upper surface (10);
- a cover film (2) having a lower surface (11) facing the base film (1) and an upper surface (12);
- an ink layer (7) applied on the upper surface (12) of the cover film (2), excepted on a first lateral edge margin (M1) of the composite film;
wherein the composite film comprises an ink line (13) applied between the base film (1) and the cover film (2), in said first lateral edge margin (M1) region, along the whole length of the composite film.

2. A composite film according to the preceding claim, wherein the ink line (13) has a lateral start that starts at least where the ink layer (7) finishes.

3. A composite film according to any of the preceding claims, wherein the ink line (13) has a lateral finish that finishes before a first lateral edge (9) of the composite film.

4. A composite film according to any of the preceding claims, wherein the ink line (13) is applied on the lower surface (11) of the cover film (2).

5. A composite film according to claims 1 to 3, wherein the ink line (13) is applied on the upper surface (10) of the base film (1).

6. A composite film according to any of the preceding claims, wherein the base film (1) and the cover film (2) each comprises a material which is sealable to itself and/or to the material of the other of these two films (1, 2).

7. A composite film according to any of the preceding claims, wherein the material forming the lower surface 8 of the base film (1) is sealable to the material forming the upper surface (12) of the cover film (2).

8. A composite film according to any of the preceding claims, wherein the material forming the lower surface (8) of the base film (1) consists preferably of polyethylene.

9. A composite film according to any of the preceding claims, wherein the material forming the upper surface (12) of the cover film (2) consists preferably of polyethylene.

10. A composite film according to any of the preceding claims, wherein the base film (1) is a multilayered film.

11. A composite film according to any of the preceding claims, wherein the thickness of the base film (1) is comprised between 200 and 400µm, and the thickness of the cover film (2) is comprised between 15 and 120µm.

12. A receptacle, in particular a tube, with a wall consisting of a cut-to-size film piece of a composite film as claimed in claim 1, said film piece comprising a first lateral edge margin (M1) and a second lateral edge margin (M2), wherein the two lateral edges margins (M1, M2) are joined together by overlapping, the cover film upper surface (12) of the first lateral edge margin (M1) being sealed to the base film lower surface (8) of the second lateral edge margin (M2).

13. A receptacle according to claim (12), wherein it comprises a gap (G) between a lateral finish (16) of the ink layer (7) and a second lateral edge (17) of the composite film, said ink line (13) extending at least over the whole gap (G).

14. A method for producing a composite film as claimed in claim 1, wherein it comprises the following steps:
- printing the ink line (13) on the upper surface (10) of the base film (1);
- laminating the base film (1) with the cover film (2);
- applying the ink layer (7) on the upper surface (12) of the cover film (2);
the last two steps could be reversed.

15. A method for producing a composite film as claimed in claim 1, wherein it comprises the following steps:
- printing the ink line (13) on the lower surface (11) of the cover film (2);
- applying the ink layer (7) on the upper surface (12) of the cover film (2);
- laminating the base film (1) with the cover film (2);
the last two steps could be reversed.
